# EUROPÄISCHE PATENTSCHRIFT

(11) **EP 3 201 016 B1**
(45) Veröffentlichungstag und Bekanntmachung des Hinweises auf die Patenterteilung: **30.01.2019**
(21) Anmeldenummer: 15756622.5
(22) Anmeldetag: 26.08.2015
(51) Int. Cl.: B60G 17/018, B60G 17/08, F16F 15/027, G05D 19/00

(54) **VERFAHREN UND SYSTEM ZUR ANSTEUERUNG EINES AKTUATORS EINES AKTIVEN DÄMPFERSYSTEMS**
METHOD AND SYSTEM FOR CONTROLLING AN ACTUATOR OF AN ACTIVE DAMPER SYSTEM
PROCÉDÉ ET SYSTÈME POUR COMMANDER UN ACTIONNEUR D'UN SYSTÈME D'AMORTISSEURS ACTIF

(30) Priorität: 01.10.2014 DE 102014219977
(43) Veröffentlichungstag der Anmeldung: 09.08.2017
(73) Patentinhaber: Bayerische Motoren Werke Aktiengesellschaft, 80809 München (DE)
(72) Erfinder: ZUSCIK, Marian, 808 07 München (SK)
(86) Internationale Anmeldenummer: PCT/EP2015/069545
(87) Internationale Veröffentlichungsnummer: WO 2016/050425

(56) Entgegenhaltungen:
- EP-A2- 2 052 884
- DE-A1- 4 302 884
- DE-A1-102004 024 951
- DE-A1-102011 100 307
- DE-C1- 3 518 503
- JP-A- S60 249 032
- JP-A- 2006 069 527
- JP-A- 2006 143 098
- US-A- 5 445 405
- US-A1- 2005 178 628

## Beschreibung

Die vorliegende Erfindung betrifft ein Verfahren zur Ansteuerung eines Aktuators eines aktiven Dämpfersystems für ein Fahrwerk eines Fahrzeugs nach dem Oberbegriff des Anspruchs 1. Weiter wird ein System zur aktiven Dämpfung eines Fahrwerks eines Fahrzeugs, vorgeschlagen, welches auch als aktives Dämpfungssystem bezeichnet wird, und in welchem ein erfindungsgemäßes Verfahren ausgeführt wird. Als nächstkommender Stand der Technik wird die EP 2 052 884 A2 erachtet.

Derzeitige aktive Dämpfungssysteme von Fahrzeugen beziehen sich hauptsächlich auf Regelungsziele beim Reglerentwurf, Stabilitäts- und Robustheitsaspekte, die Realisierbarkeit und eine transparente Parametrierung für eine spätere Applikation. Dabei kommen vor allem Entwurfsverfahren wie Linear-Parameter variierende Regelungen (LPV)-Methoden der optimalen Steuerung, modellprädikative Verfahren, sowie referenzmodellbasierte Regelungen zum Einsatz. Diese werden anschließend experimentell in Fahrversuchen appliziert und verifiziert.

DE 3738 284 A1 nennt eine Vorrichtung zur aktiven Fahrwerksregelung, mit einem Niveauregulierungssystem, welches ein erstes in Abhängigkeit zum relativen Einfederweg beaufschlagtes aktives Stellglied umfasst. Zur Gewinnung der rückgeführten Vertikalgeschwindigkeit bzw. einer dieser Geschwindigkeit proportionalen Größe dienen Beschleunigungssensoren oder Drehbeschleunigungssensoren.

DE 103 53 692 A1 offenbart eine Fahrzeugvibrationssteuervorrichtung zur Steuerung eines Motors und einer Bremse in Antwort auf einen Eingang, der wenigstens einen der Fahrerbetätigungsvorgänge anzeigt. Die Vibrationsberechnungsvorrichtung dient zur Berechnung einer Reifenvibration aufgrund einer Rückstellkräft seitens der Fahrbahnoberfläche.

DE 195 16 402 A1 zeigt eine Schaltungsanordnung, die eine Regelstrecke mit einem Ausgangssignal und einem kontinuierlichen oder diskreten, linearen oder nicht-linearen Regler mit nachgiebiger Rückführung der Stellgröße umfasst. Es wird im Allgemeinen als erstes Regelstrecken-Zustandsmodell ein Modell höherer als erster Ordnung verwendet. Hierbei entsteht ein Instabilitätsproblem des inneren Regelkreises, der daher nicht als PI, sondern als PID-Typ ausgeführt werden muss. Anhand einer Polvorgabe der Übertragungsfunktion der Matrix M (s) soll eine Beschleunigung des Regelprozesses beim Eintritt einer Regelgrößen-Störung erzielt werden.
DE 10 2004 024 951 A1 offenbart ein Verfahren zur Ermittlung der Bewegung eines Aufbaus eines Fahrzeugs, bei welchem die Signale eines Höhenstandssensors über ein Differentiationsfilter und die Signale von Vertikalbeschleunigungs-Sensoren der Räder über ein Integrationsfilter geführt und anschließend addiert werden.
US 5,235,529 offenbart ein System zur Steuerung eines Fahrwerkes, bei welchem Signale an der Karosserie angeordneter Vertikalbeschleunigungssensoren integriert und über einen Hochpass gefiltert werden.
In der zur Bildung des Oberbegriffs des Anspruchs 1 herangezogenen EP 2 052 884 A2 ist ein Verfahren zur Erzeugung von Signalen zur Beeinflussung der Bewegung eines in seinen Bewegungsabläufen steuerbaren oder regelbaren Fahrzeugaufbaus eines Kraftfahrzeuges beschrieben, wobei sensorisch die Bewegung des Fahrzeugaufbaus ermittelt wird, wonach die den ermittelten Sensorwerten entsprechenden Sensorsignale einem Dämpferregler zugeführt werden und der Dämpferregler wenigstens ein Steuersignal zur Ansteuerung von Aktuatoren, insbesondere semi-aktiven oder aktiven Dämpfern, liefert, mittels denen die Bewegung des Fahrzeugaufbaus beeinflusst werden kann. Dabei ist vorgesehen, dass mittels des Dämpferreglers aus den Sensorsignalen unter Beruecksichtigung von momentanen und erwarteten querdynamischen Zustandsgrößen des Fahrzeugs das wenigstens eine Steuersignal zur Ansteuerung der Aktuatoren ermittelt wird.

Weitere relevante Verfahren und Systeme zur Ansteuerung eines Dämpfers sind in DE 43 02 884 A1 und US2005/0 178 628 A1 beschrieben.

Beim Einsatz verschiedener gängiger Regelungskonzepte für mechanische Systeme, wie z.B. beim Poleplacement, oder auch bei anderen Methoden der optimalen Steuerung, wird bisher allgemein auf die Zustandsgrößen "Weg" und "Geschwindigkeit" geregelt. Berechnungen aufgrund einer Ableitung wie beispielsweise der Beschleunigung, die sensorisch an sich gut erfasst werden kann, werden nicht direkt, ohne vorher auf die Geschwindigkeit oder den Weg integriert zu werden, verwendet. Ebenfalls wird der Einfluss von Masse oder Masseträgheit, sowie der sich daraus ergebenden Polen bzw. Eigenfrequenzen der einzelnen Elemente rein durch zusätzlich aktiv gestellte Dämpfung und gezielte Steifigkeiten kompensiert. Das führt oft zu unlösbaren Zielkonflikten oder zu, aus Gründen der Leistungsbegrenzung nicht realisierbaren aktiven Eingriffen. Überdies ergibt sich bei aktiven Dämpfersystemen die Problematik, dass die zur aktiven Fluidverschiebung vorgesehenen Aktuatoren eine zusätzliche, beim Einfedern zu bewegende Masse darstellen, welche die Federung bei höheren Frequenzen der Anregung zusätzlich steifer gestalten.

Es ist daher eine Aufgabe der vorliegenden Erfindung, die zuvor identifizierten Nachteile des Standes der Technik auszuräumen bzw. zu lindern.

Die vorstehend identifizierte Aufgabe wird erfindungsgemäß durch ein Verfahren nach Anspruch 1 zur Ansteuerung eines Aktuators eines aktiven Dämpfersystems gelöst; in weiteren Ansprüchen angegeben sind vorteilhafte Weiterbildungen sowie ein System zur aktiven Dämpfung und ein entsprechend ausgerüstetes Fahrzeug.

Das Verfahren kann beispielsweise in einem aktiven hydraulischen Dämpfersystem eines Fahrwerks eines Fahrzeugs eingesetzt werden. In einem ersten Schritt wird ein eine erste Beschleunigung repräsentierendes erstes elektrisches. Signal gefiltert. Dieses kann beispielsweise mittels eines Beschleunigungssensors aufgenommen und elektrisch gewandelt werden. Die anschließende Filterung entfernt einen Gleichanteil und kann daher z.B. als Hochpassfilter oder Bandpassfilter ausgestaltet sein. Das Beschleunigungssignal ist einem Aufbau des Fahrzeugs bzw. einer gefederten Masse und/oder einem radseitigen Bauteil bzw. einer ungefederten Masse des Fahrzeugs zugeordnet. Beispielsweise können hierzu Beschleunigungsaufnehmer verwendet werden, welche auch zu anderen Zwecken häufig bereits in Serienfahrzeugen verbaut sind. Um aus dem derart gewonnenen elektrischen Signal ein zur Ansteuerung des Aktuators geeignetes Signal zu machen, wird das gefilterte Signal in seiner Amplitude angepasst. Seiner Natur nach ist dieses erste elektrische Signal bevorzugt noch immer ein Beschleunigungssignal, ist also entgegen dem Stand der Technik nicht integriert oder anderweitig als vorbeschrieben verarbeitet worden.

Das so verarbeitete erste elektrische Signal wird - wie noch weiter erläutert wird zusammen mit zumindest einem weiteren Signal - als Eingangsgröße des Aktuators verwendet, mittels dessen die bewegten Teile des Aktuators derart angetrieben werden, dass sie in Richtung des sich aufgrund der Anregung einstellenden hydraulischen Flusses angetrieben werden. Mit anderen Worten weicht der Aktuator dem aufgrund der Anregung erzeugten hydraulischen Fluss aktiv oder proaktiv aus, um die inneren Eigenschaften wie Dämpfung und die Massenträgheit eines aktiven Dämpfers in einem vordefinierten Frequenzbereich zu verringern und den Aufbau bzw. die gefederte Masse des Fahrzeugs von der Anregung zu entkoppeln bzw. die Übertragung der Anregung zu vermindern. Während im Stand der Technik aktive Dämpfersysteme derart ausgestaltet sind, dass eine vorteilhafte Einflussnahme auf Anregungsfrequenzen oberhalb von 2,5 Hz aufgrund der Signalverarbeitungslatenz nur sehr beschränkt möglich ist, bietet die im Wesentlichen direkte Verwendung eines Beschleunigungssignals, insbesondere in Verbindung mit der Hochpassfilterung, eine derart geringe Verarbeitungszeit, dass eine vorteilhafte Ansteuerung des Aktuators bis in deutlich höhere Frequenzbereiche als üblich möglich ist. Dies ist umso wertvoller für die Auslegung moderner Fahrwerke, als Anregungssignale oberhalb von 4 Hz für Fahrzeuginsassen mit deutlich stärkeren Komforteinbußen verbunden sind, als Anregungssignale unterhalb von 4 Hz. '

Es werden mehrere Beschleunigungsgrößen (nämlich des Aufbaus des Fahrzeugs bzw. einer gefederten Masse und eines radseitigen Bauteils bzw. einer ungefederten Masse des Fahrzeugs) berücksichtigt, welche im erfindüngsgemäß zu dämpfenden Systems vorliegen bzw. geschätzt werden können, weshalb eine zweite Beschleunigungsgröße in ein drittes elektrisches Signal gewandelt, gefiltert, hinsichtlich ihrer Amplitude angepasst und gegenüber dem ersten elektrischen Signal gewichtet wird. Die Verarbeitung des dritten elektrischen Signals kann bevorzugt in entsprechender Weise wie die Verarbeitung des ersten elektrischen Signals erfolgen. Hierbei können jedoch von der Signalverarbeitung des ersten elektrischen Signals verschiedene Werte für die Parameter (insbesondere Verstärkung/Dämpfung) der Signalverarbeitung gewählt werden. Beispielsweise in Abhängigkeit eines Fahrzustandes und/oder einer Frequenz des Anregungssignals kann ein jeweiliger vordefinierter Faktor für die elektrischen Signale verwendet werden, um den Aktuator mit einer bestmöglich geeigneten Kombination (z.B. Summe) der gefilterten, und verstärkten Signale anzusteuern. Auf diese Weise kann das erfindungsgemäße Verfahren auf eine Vielzahl vorliegender Schwingungsgrößen zugreifen, um eine bestmögliche aktive Anpassung des Schwingungszustands zu realisieren.

Sofern ein Beschleunigungssensor zur Erzeugung des Beschleunigungssignals nicht verwendet werden soll oder nicht zur Verfügung steht, kann alternativ oder zusätzlich eine Schätzung des ersten und/oder zweiten Beschleunigungssignals auf Basis einer alternativen Kenngröße durchgeführt werden. Als solche kann eine elektrische Klemmengröße des Aktuators verwendet werden, auf Basis welcher ein Schätzwert für das erste Beschleunigungssignal ermittelt wird. Auf diese Weise können auch für bewegte Massen eines Fahrzeugs, an welchem keine Beschleunigungsaufnehmer vorhanden sind oder anbringbar sind, Beschleunigungssignale ermittelt und der erfindungsgemäßen Verarbeitung zugrunde gelegt werden.

Zur Verbesserung der Verarbeitung, insbesondere der Anpassung der Amplitude des ersten und/oder zweiten Beschleunigungssignals, kann das Verfahren weiter eine Überprüfung des erfindungsgemäß erzielten Erfolges vornehmen, indem das erste und/oder zweite Beschleunigungssignal (z.B. zu einem späteren Zeitpunkt) erneut oder fortwährend aufgenommen wird und die Amplitude des jeweiligen elektrischen Signals vor dem Ansteuern des Aktuators im Ansprechen auf das Ergebnis der Auswertung (beispielsweise ein Vergleich mit einer vordefinierten Referenz, einem Tabellenwert, o.ä.) erneut (alternativ) angepasst wird. Dies kann als geschlossene Regelschleife aufgefasst werden, durch welche ein iteratives/rückgekoppeltes Verfahren zur schwingungstechnischen Entkoppelung des Aufbaues bzw. einer gefederten Masse des Fahrzeugs vorgeschlagen wird.

Zusätzlich zur Verwendung des ersten und zweiten Beschleunigungssignals kann selbstverständlich auch ein weiteres Beschleunigungssignal bzw. können weitere Beschleunigungssignale gemessen oder basierend auf den elektrischen Klemmengrößen oder den Bewegungsgrößen eines anderen Bauteils des Fahrzeugs geschätzt werden.

Um für Frequenzen des Anregungssignals unterhalb einer Grenze von ca. 2,5 Hz eine hohe Dämpfung durch den Aktuator bzw. den aktiven Dämpfer realisieren zu können, empfiehlt es sich, parallel zur vorbeschriebenen Hochpassfilterung und Amplitudenanpassung eine Integration des ersten und/oder zweiten Beschleunigungssignals (oder eines weiteren Beschleunigungssignals) durchzuführen, das jeweilige resultierende Geschwindigkeitssignal einer Hochpassfilterung zu unterziehen und ebenfalls hinsichtlich seiner Amplitude anzupassen. Anschließend kann das Ergebnis (ein jeweiliges zweites elektrisches Signal) zum erfindungsgemäß erstellten ersten bzw. dritten elektrischen Signal addiert und die jeweilige Summe beider Signale zur Ansteuerung des Aktuators verwendet werden. Auf diese Weise kann eine nach dem Stand der Technik bekannte Regelung des aktiven Dämpfersystems zur Darstellung einer hohen Dämpfung in niedrigen Frequenzbereichen mit einer erfindungsgemäß vorgeschlagenen Regelung des aktiven Dämpfersystems für höhere Frequenzbereiche zur Entkoppelung des Aufbaues von der Anregung miteinander kombiniert werden. Dies verbessert das Gesamtverhalten des aktiven Dämpfersystems bei der Verwendung in einem Fahrzeug.

Allgemein kann die Anpassung der Amplitude der elektrischen Signale in Abhängigkeit beispielsweise der Anregungsamplitude linear (z.B. durch Verwendung eines konstanten Faktors) oder nicht-linear (z.B. durch Verwendung einer Kennlinie oder eines Kennfeldes) erfolgen. Auf diese Weise können die Signale der Beschleunigungssensoren zum Entfernen vorbestimmter Eigenfrequenzen eines schwingenden Gesamtsystems (bestehend z.B. aus der ungefederten Masse, einer gefederten Masse und weiterer Massen, deren Eigenfrequenz zu entfernen ist (z.B. bewegter Teile des Aktuators/Gerotors)) gezielt verarbeitet werden.

Die grundlegenden, vorstehend beschriebenen Ansätze des erfindungsgemäßen Verfahrens versetzen den Fachmann für Schwingungs- und Regelungstechnik von Fahrzeugen in die Lage, in der Literatur bereits bekannte theoretische Ansätze der Polvorgabe bzw. des Polplacements oder der optimalen Regelung zu verwenden, um eine technische Realisierung der vorliegenden Erfindung herzustellen. Beim Reglerentwurf werden dem geschlossenen Regelkreis Wunscheigenwerte bzw. Wunschpolstellen vorgegeben und damit das Ein-/Ausgangsverhalten sowie die Eigenbewegungen des geschlossenen Systems gezielt beeinflusst. Damit lässt sich auch ein Pol entsprechend glätten bzw. kompensieren. Eine eingehende Anregung beispielsweise stammend von der Fahrbahn, über welche ein betrachtetes, erfindungsgemäß ausgestaltetes Fahrzeug fährt, wird durch eine entsprechende Regelung im Frequenzgang entfernt. Hauptaugenmerk ist dabei, auf eine mögliche Kompensation der Einflüsse der ungefederten auf die gefederte Masse zu legen, da das Schwingungsverhalten der gefederten Masse über den Komfort für den Anwender entscheidet.

Gemäß einem zweiten Aspekt der vorliegenden Erfindung wird ein System zur aktiven Dämpfung vorgeschlagen, welches auch als "aktiver hydraulischer Dämpfer" ausgeführt sein kann. Insbesondere können solche Systeme für Fahrwerke von Fahrzeugen verwendet werden, um den Fahrkomfort bzw. die Fahrsicherheit des Fahrzeugs positiv zu beeinflussen. Das erfindungsgemäße System umfasst einen Aktuator, der beispielsweise aus einer hydraulischen Pumpe und einem Elektromotor zu deren Antrieb bestehen kann. Über den Aktuator kann Fluid (Hydraulikfluid), welches zur Dämpfung zwischen einem ersten und einem zweiten Volumen eines Dämpfers hin- und her fließen kann, angetrieben oder sogar zur Energiegewinnung verwendet werden. Sowohl rotatorische als auch translatorische Aktuatoren sind im Stand der Technik als für aktive Dämpfungssysteme geeignet bekannt. Weiter sind ein erster Sensor und ein zweiter Sensor vorgesehen, welcher beispielsweise zur Aufnahme einer ersten Beschleunigung bzw. einer zweiten Beschleunigung oder eines alternativen Signals, auf Basis dessen die erste Beschleunigung ermittelt (z.B. geschätzt) werden kann, eingerichtet ist. Ein Filter, der beispielsweise in einem elektronischen Steuergerät angeordnet sein kann, kann als Hochpass- oder Bandpassfilter ausgestaltet sein, so dass Gleichanteile des ersten bzw. dritten elektrischen Signals entfernt und ein elektrisches Vorauseilen seines Ausgangssignals gegenüber dem ersten bzw. zweiten Beschleunigungssignal herbeigeführt wird. Dies ermöglicht eine Anwendung des erfindungsgemäßen Systems auf solche Frequenzen, welche durch bekannte Systeme nicht in geeigneter Weise beeinflusst werden können. Zudem ist ein steuerbarer Verstärker (beispielsweise ebenfalls innerhalb des elektronischen Steuergeräts) vorgesehen, welcher eingerichtet ist, eine Amplitude des ersten und/oder dritten elektrischen Signals (z.B. des jeweiligen Filterausgangssignals) anzupassen. Der Aktuator ist weiter eingerichtet, mit dem gefilterten und hinsichtlich seiner Amplitude angepassten elektrischen Signal, welches eine Kombination des ersten elektrischen Signals und des dritten elektrischen Signals umfassen kann, angesteuert zu werden. Auf diese Weise verwirklicht das erfindungsgemäße System die Merkmale, Merkmalskombinationen und die sich aus diesen ergebenden Vorteile des erfindungsgemäßen Verfahrens, so dass zur Vermeidung von Wiederholungen auf eine erneute Diskussion verzichtet werden kann.

Gemäß einem dritten Aspekt der vorliegenden Erfindung wird ein Fahrzeug mit einem aktiven Fahrwerksdämpfer vorgeschlagen, welcher eingerichtet ist, durch ein System gemäß dem zweitgenannten Erfindungsaspekt angesteuert zu werden. Auf diese Weise verbessert sich der Schwingungskomfort für Insassen des erfindungsgemäßen Fahrzeugs erheblich. Das Fahrzeug kann beispielsweise als PKW, als Transporter oder als LKW ausgestaltet sein. Es ergeben sich die in Verbindung mit dem erst- und zweitgenannten Erfindungsaspekt ausgeführten Merkmale, Merkmalskombinationen und Vorteile entsprechend.

Gemäß einem vierten Erfindungsaspekt wird ein Computerprogrammprodukt (z.B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blueray Disc, Flash-Speicher, Festplatte, RAM/ROM, Cache, etc., ausgestaltet sein.

Weitere Einzelheiten, Merkmale und Vorteile der Erfindung ergeben sich aus der nachfolgenden Beschreibung und den Figuren. Es zeigen:
- Figur 1: eine schematische Seitenansicht eines erfindungsgemäß ausgestalteten Fortbewegungsmittels;
- Figur 2: eine schematische Skizze zu Aufbau und Wirkprinzip eines erfindungsgemäß ausgestalteten aktiven Fahrwerksdämpfers;
- Figur 3: ein Flussdiagramm veranschaulichend die Signalverarbeitung innerhalb eines erfindungsgemäß ausgestalteten ersten Ausführungsbeispiels der vorliegenden Erfindung;
- Figur 4: ein Flussdiagramm veranschaulichend die Signalverarbeitung innerhalb eines erfindungsgemäß ausgestalteten, zweiten Ausführungsbeispiels der vorliegenden Erfindung;
- Figur 5: ein mechanisches Ersatzschaltbild des aktiven Dämpfers entsprechend Figur 2;
- Figur 6: ein mechanisches Ersatzschaltbild eines Teils eines erfindungsgemäß ausgestalteten Fahrzeugs (sog. "Viertelfahrzeugmodell", englisch: "Quarter Car Model");
- Figur 7: ein Diagramm veranschaulichend Amplitudengänge von Übertragungsfunktionen unterschiedlicher Dämpfungssysteme; und
- Figur 8: ein Flussdiagramm veranschaulichend Schritte eines Ausführungsbeispiels eines erfindungsgemäßen Verfahrens.

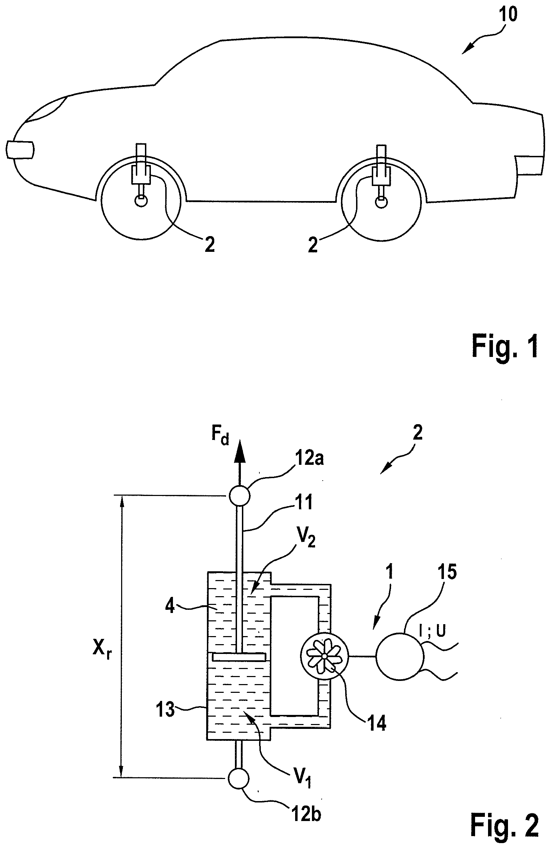

Figur 1 zeigt die Seitenansicht eines PKW 10 als erfindungsgemäß ausgestaltetes Fahrzeug. Die Räder des PKWs 10 sind über aktive Dämpfer 2 gemäß der vorliegenden Erfindung mit dem Fahrzeugaufbau gekoppelt.

Figur 2 zeigt ein Ausführungsbeispiel eines erfindungsgemäß ausgestalteten aktiven Dämpfersystems 2, innerhalb dessen hydraulisches Fluid 4 zwischen einem ersten Volumen V₁ und einem zweiten Volumen V₂ ausgetauscht werden kann. Im passiven Betrieb geschieht dies allein aufgrund einer externen Anregung der Anbindungspunkte 12b des Zylinders 13 bzw. 12a des Kolbens 11. Über ein Schaufelrad 14 kann ein aktiver Hydraulikfluidaustausch angeregt werden, in dem das Schaufelrad 14 über einen bürstenlosen Gleichstrommotor 15 angetrieben wird, mit welchem es über eine Welle gekoppelt ist. In umgekehrter Wirkrichtung kann der bürstenlose Gleichstrommotor 15 als Generator zur Gewinnung elektrischer Energie aus der Fluidbewegung verwendet werden. Die elektrischen Klemmgrößen des bürstenlosen Gleichstrommotors 5 sind der Strom I und die elektrische Spannung U. Zudem ist die Wirkrichtung der Dämpferkraft F_{d} anhand eines Pfeils veranschaulicht. Mit xᵣ ist die Entfernung zwischen den Anbindungspunkten 12a und 12b bezeichnet.

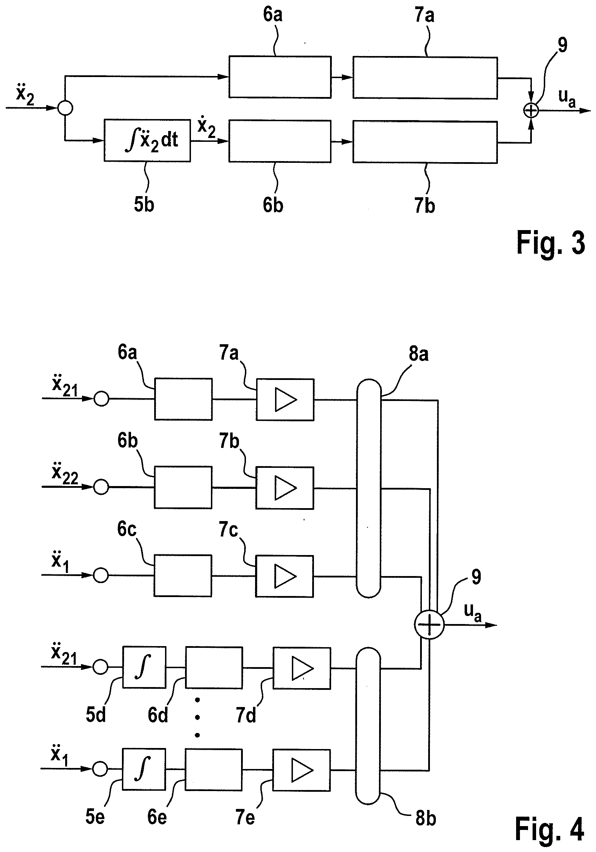

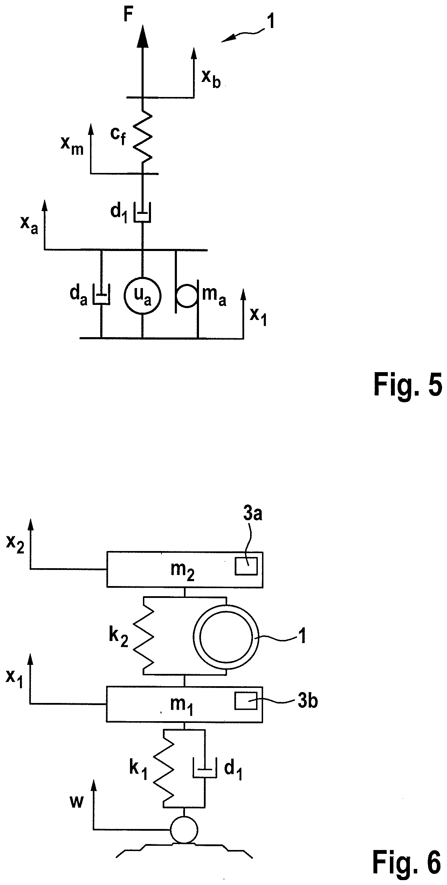

Figur 3 zeigt die Signalverarbeitung eines Beschleunigungssignals ẍ₂, welches die Beschleunigung eines Fahrzeugaufbaues darstellt. Ein solches Beschleunigungssignal ẍ₂ kann beispielsweise mittels eines Beschleunigungssensors (Bezugszeichen 3a, 3b in Fig. 6) in ein erstes elektrisches Signal gewandelt werden. Im oberen Zweig erfolgt eine direkte Filterung des Beschleunigungssignals ẍ in einem Hochpassfilter 6a, welcher beispielsweise eine Grenzfrequenz von 20 Hz aufweisen kann. In Versuchen haben sich Butterworth-Filter erster Ordnung bewährt. Das derart gefilterte Beschleunigungssignal wird in einem steuerbaren Verstärker 7a mit einer Masse von 800 kg multipliziert, um ein geeignetes Kraftsignal auf einen Summierer 9 auszugeben. In einem unteren Zweig zur Erzeugung geeigneter Ansteuersignale für den Aktuator des erfindungsgemäßen Dämpfersystems 2 wird das Beschleunigungssignal ẍ₂ zunächst in einem Integrator 5b über der Zeit integriert; um ein korrespondierendes Geschwindigkeitssignal ẋ₂ auf einen Hochpassfilter 6b mit einer Grenzfrequenz von 0,2 Hz zu geben. Auch dieser Hochpassfilter 6b ist als Butterworthfilter erster Ordnung ausgestaltet. Das Ausgangssignal des Filters wird einem steuerbaren Verstärker 7b zugeführt, in welchem es mit einer Dämpfung von 3000 Ns/m multipliziert wird, um ein entsprechend einem idealen ortsfesten Fahrzeugaufbau angepasstes Ausgangssignal auf dem Summierer 9 zu geben, welcher ein entsprechendes Spannungssignal uₐ für die Ansteuerung des Aktuators bereitstellt.

Figur 4 zeigt eine alternative Ausgestaltung eines erfindungsgemäßen Reglers, welcher drei Beschleunigungssignale ẍ₂₁, ẍ₂₂, ẍ₁ verwendet. Die beiden Beschleunigungssignale ẍ₂₁, ẍ₂₂ werden durch zwei am Fahrzeugaufbau angeordnete Beschleunigungssensoren bereitgestellt. Das Beschleunigungssignal ẍ₂₁ repräsentiert ein anspruchsgemäßes erstes Beschleunigungssignal. Das Beschleunigungssignal ẍ₂₂ repräsentiert ein anspruchsgemäßes Beschleunigungssignal. Das anspruchsgemäß zweite Beschleunigungssignal ẍ₁ wird durch einen Beschleunigungssensor an einer ungefederten Masse m₁ des Fahrzeugs bereitgestellt.. Die drei oberen erfindungsgemäß die Beschleunigungssignale ẍ₂₁, ẍ₂₂, ẍ₁ direkt verarbeitenden Signalzweige sind entsprechend dem oberen Signalzweig der Fig. 3 ausgestaltet. Durch eine Gewichtungseinheit 8a werden die Signalausgänge der Verstärker 7ä, 7b, 7c in vordefinierter Weise zueinander gewichtet, bevor sie dem Summierer 9 zugeführt werden. Die beiden unten in Figur 4 exemplarisch dargestellten Signalzweige führen eine Integration der Beschleunigungssignale ẍ₂₁, ẍ₁ in jeweiligen Integriergliedern 5d, 5e durch, bevor ebenfalls entsprechend dem unteren Zweig in Figur 3 zwei Hochpassfilter 6d, 6e und zwei steuerbare Verstärker 7d, 7e zum Einsatz gelangen. Auch die Ausgangssignale der steuerbaren Verstärker 7d, 7e werden durch ein weiteres Gewichtungsglied 8b relativ zueinander gewichtet, bevor dessen Ausgangssignale dem Summierer 9 zugeführt werden. Dessen Ausgangssignal uₐ wird wie vorstehend beschrieben als Eingangssignal des erfindungsgemäß ausgestalteten Aktuators verwendet.

Figur 5 zeigt ein mechanisches Ersatzschaltbild (Netzwerkdarstellung) eines aktiven Dämpfersystems 2 (siehe Fig. 2), wie er erfindungsgemäß zum Einsatz gelangen kann. Die eigentliche Fluiddämpfung wird durch das Dämpfungsglied dₗ abgebildet. Oberhalb dieses Dämpfungsgliedes ist die endliche Fluidsteifigkeit mit c_{f} modelliert. Unterhalb des Dämpfungsgliedes dₗ modelliert eine Parallelschaltung aus einem die Aktuatordämpfung modellierenden Dämpfungsglied dₐ, einer im Wesentlichen die rotatorischen Massenträgheiten der Pumpe 14 sowie des Motors 15 sowie oberflächlich angekoppelten hydraulischen Fluides 4 abbildende Aktuatormasse mₐ sowie ein die elektromagnetisch eingebrachte Kraft uₐ abbildendes Element die motorischen Einflüsse des Aktuators ab. x₁ stellt die Bewegung der ungefederten Masse umfassend das Rad und andere radseitige Teile dar. xₐ stellt die ausgangsseitige Bewegung des Aktuators dar xₘ stellt den Weg des zwischen dem Dämpfungsglied dₗ und der Fluidsteifigkeit c_{f} liegenden (virtuellen) Koppelpunktes des Dämpfermodells (ohne Hysterese) dar x_{b} stellt den Weg des aufbauseitigen Anbindungspunktes 12a des Dämpferkolbens 11 und F die von ihm weitergereichte hydraulische Dämpfungskraft F dar.

Figur 6 zeigt ein vereinfachtes Ersatzschaltbild für ein Viertelfahrzeug, um die Anregung w einer Fahrbahnoberfläche über einen Reifen (abgebildet durch eine Federsteifigkeit k₁ und einen Dämpfer d₁) in die ungefederte Masse m₁ abzubilden. Der Weg x₁ ist der ungefederten Masse m₁ zugeordnet, deren Beschleunigung ẍ₁ als anspruchsgemäße zweite Beschleunigung messtechnisch durch einen Beschleunigungssensors 3b ermittelt wird. Die eigentliche Fahrwerksfeder k₂ trägt im Zusammenwirken mit einem erfindungsgemäß ausgestalteten aktiven Fahrwerksdämpfer 1, welchem sie parallel geschaltet ist, die Masse m₂ des Fahrzeugaufbaues. Die Masse m₂ des Aufbaues bildet auch ein Beispiel für einen Anbringungsort eines Beschleunigungssensors 3a. Die gefederte Masse m₂ führt einen Weg x₂ aus, dessen zweite Ableitung ẍ₂ als anspruchsgemäße erste Beschleunigung den vorstehend beschriebenen Beispielen als Eingangsgröße der erfindungsgemäß vorgeschlagenen Signalverarbeitung dient.

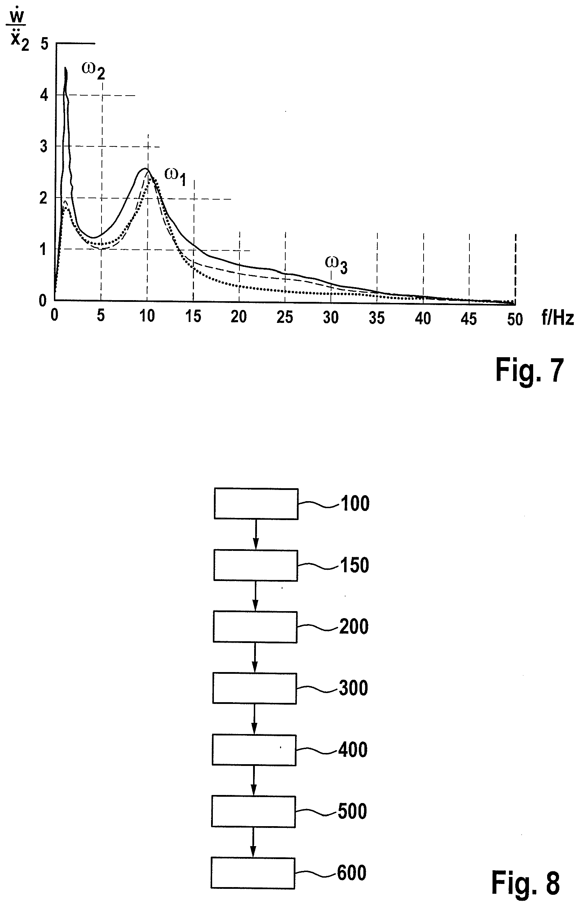

Figur 7 zeigt den Quotienten zwischen der Anregungsgeschwindigkeit w und der Fahrzeugaufbaubeschleunigung ẍ₂ als Übertragungsfunktion unterschiedlicher aktiver Dämpfersysteme über der Frequenz. Die durchgezogene Linie, welche im Bereich von 2 Hz einen besonders starken und mit ω₂ bezeichneten Peak aufweist, ist einem ungeregelten aktiven Fahrwerksdämpfer zugeordnet. Ihr Verlauf ist über dem gesamten Frequenzbereich am höchsten. Im Vergleich hierzu stellt der gestrichelte Signalverlauf, welcher einer Übertragungsfunktion mit geschlossener Schleife und konventionellem ideal ortsfesten Aufbau ("Skyhook") entspricht, eine erkennbare Verbesserung hinsichtlich der Höhe der Ausschläge ω₁, ω₂ dar. Auch die Zwischenräume zwischen den vorgenannten Ausschlägen ω₁, ω₂ der Übertragungsfunktion sind erkennbar abgesenkt. Eine erfindungsgemäße Regelung eines aktiven Dämpfers mit einer geschlossenen Regelschleife ermöglicht entsprechend der gepunktet dargestellten Übertragungsfunktion eine weitere Verbesserung, indem einerseits die Eigenfrequenz ω₁ erkennbar angehoben und die Übertragungsfunktion hinsichtlich ihrer Amplitude in diesem Bereich deutlich abgesenkt wird. Insbesondere in Bereichen zwischen 15 und 35 Hz wird eine ganz erhebliche Absenkung der Amplitude der Übertragungsfunktion erzielt. Da gerade im Bereich zwischen ω₁ und ω₂ Schwingungsanregungen eine starke Beeinträchtigung des Fahrkomforts bewirken, stellt die erfindungsgemäß vorgeschlagene Regelung eine ganz erhebliche Verbesserung aktiver Dämpfungssysteme bereit. Eine ähnliche Verbesserung kann auch durch Verwendung der Radbeschleunigung ẍ₁ oder einer geeigneten Gewichtung mehrerer Signale (z.B. der Radbeschleunigung ẍ₁) erreicht werden.

Figur 8 zeigt Schritte eines Ausführungsbeispiels eines erfindungsgemäßen Verfahrens zur Ansteuerung eines Aktuators eines aktiven Dämpfersystems. In Schritt 100 werden ein erstes Beschleunigungssignal und ein zweites Beschleunigungssignal (ein Beschleunigungssignal repräsentierend eine andere Beschleunigung im System) mittels eines jeweiligen Beschleunigungssensors aufgenommen und in ein erstes bzw. drittes elektrisches Signal gewandelt. Zur Dämpfung besonders niedriger Frequenzen wird im optionalen Schritt 150 das die erste Beschleunigung repräsentierende erste elektrische Signal zur Erzeugung eines eine Geschwindigkeit repräsentierenden zweiten elektrischen Signals integriert. Dies geschieht gemäß den im Stand der Technik bekannten Verfahren und wird in technischen Realisierungen durch einen parallelen Signalverarbeitungszweig durchgeführt. In Schritt 200 werden das die erste Beschleunigung repräsentierende erste elektrische Signal und das die zweite Beschleunigung repräsentierende dritte elektrische Signal mittels eines jeweiligen Hochpassfilters verarbeitet, deren Ausgangssignale in Schritt 300 durch eine Verstärkung hinsichtlich ihrer Amplitude angepasst werden. Da in den vorgenannten Schritten 100 bis 300 parallel mehrere Beschleunigungssignale aufgenommen und entsprechend wie beschrieben verarbeitet wurden, wird in Schritt 400 eine Gewichtung des ersten elektrischen Signals und des dritten elektrischen Signals durchgeführt. Eine solche Gewichtung kann beispielsweise in Abhängigkeit einer Anregungsamplitude und/oder -einer Anregungsfrequenz oder -grundfrequenz erfolgen, um in Anbetracht der Anregung besonders geeigneter Beschleunigungssignale bei der späteren Verwendung bevorzugt zu berücksichtigen. Anschließend wird in Schritt 500 der Aktuator mit einer gewichteten Summe aus dem jeweils gefilterten und hinsichtlich seiner Amplitude angepassten elektrischen ersten und dritten Signal angesteuert. Erfindungsgemäß verringert sich die effektive Masse des Aktuators, welche schwingungstechnisch sozusagen von der gefederten Masse des Systems ("Fahrzeug") entkoppelt wird.

### Bezugszeichenliste:

- 1: Aktuator
- 2: Dämpfersystem
- 3a, b: Beschleunigungssensor
- 4: Hydraulikfluid
- 5b-5e: Integrierglied
- 6a-6e: Hochpassfilter
- 7a-7e: steuerbarer Verstärker
- 8a,8b: Gewichtungsglied
- 9: Summierer
- 10: PKW
- 11: Kolben
- 12a,12b: Anbindungspunkte
- 13: Zylinder
- 14: Pumpenrad
- 15: Elektromotor
- 100-600: Verfahrensschritt
- F_{d}: Dämpferkraft
- V₁, V₂: Volumina
- I: elektrischer Strom
- U: elektrische Spannung
- x: Weg/Entfernung
- ẋ: Geschwindigkeit
- ẍ: Beschleunigung
- uₐ: elektrisches Eingangssignal des Aktuators
- F: Kraft
- c_{f}: Federsteifigkeit
- d: Dämpfung
- k: Steifigkeit
- w: Anregungsgeschwindigkeit
- ω₁: Eigenfrequenz
- ω₂: Eigenfrequenz
- ω₃: Eigenfrequenz
- f: Frequenz

## Patentansprüche

1. Verfahren zur Ansteuerungeines Aktuators (1) eines aktiven Dämpfersystems (2) für ein Fahrwerk eines Fahrzeugs (10), umfassend die Schritte:
- Filtern (200) eines eine erste Beschleunigung (ẍ₂), nämlich eine Beschleunigung eines Fahrzeugaufbaus oder einer gefederten Masse (m₂) repräsentierenden ersten elektrischen Signals,
- Filtern (200) eines eine zweite Beschleunigung (ẍ₂₂) repräsentierenden dritten elektrischen Signals,
- Anpassen (300) einer Amplitude des ersten elektrischen Signals und
- Anpassen (300) einer Amplitude des dritten elektrischen Signals,
- Gewichten (400) des ersten elektrischen Signals und des dritten elektrischen Signals, und
- Ansteuern (500) des Aktuators (1) mit einer gewichteten Summe aus dem jeweils gefilterten und hinsichtlich seiner Amplitude angepassten ersten und dritten elektrischen Signal,
**dadurch gekennzeichnet, dass** das zweite Beschleunigungssignal einem radseitigen Bauteil oder einer ungefederten Masse (m₁) des Fahrzeugs (10) zugeordnet ist, und
**gekennzeichnet durch** zumindest einen weiteren Schritt, nämlich
- Aufnehmen (100) und Wandeln des ersten Beschleunigungssignals und/oder des zweiten Beschleunigungssignals mittels eines Beschleunigungssensors (3a, 3b), und/oder
- Schätzen des ersten Beschleunigungssignals und/oder des zweiten Beschleunigungssignals auf Basis einer elektrischen Klemmengröße (I, U) des Aktuators (1).

2. Verfahren nach einem der vorstehenden Ansprüche weiter umfassend die Schritte
- Aufnehmen (500) des ersten Beschleunigungssignals, und
- erneutes Anpassen (600) der Amplitude des ersten elektrischen Signals vor dem Ansteuern des Aktuators (1) im Ansprechen auf ein Ergebnis der Auswertung.

3. Verfahren nach einem der vorstehenden Ansprüche weiter umfassend die Schritte
- Integrieren (150) des die erste Beschleunigung (ẍ₂) repräsentierenden ersten elektrischen Signals zur Erzeugung eines eine Geschwindigkeit (ẋ₂) repräsentierenden zweiten elektrischen Signals,
- Filtern (200) des zweiten elektrischen Signals,
- Anpassen (300) einer Amplitude des zweiten elektrischen Signals und anschließend
- Ansteuern (500) des Aktuators (1) basierend auf einem Summensignal (Uₐ) aus dem jeweils gefilterten und hinsichtlich seiner Amplitude angepassten ersten elektrischen Signal und dem zweiten elektrischen Signal.

4. System zur aktiven Dämpfung für ein Fahrwerk eines Fahrzeugs (10), wobei in diesem System ein Verfahren nach einem vorangegangenen Ansprüche ausgeführt wird und das System umfasst:
- einen Aktuator (1), welcher zum elektromotorischen Pumpen eines im Wesentlichen zur Dämpfung vorgesehenen Fluides (4) dient und insbesondere einen Gerotor, der mit einem Elektromotor (15) angetrieben wird, umfasst,
- einen ersten Sensor (3a), welcher eingerichtet ist, ein eine erste Beschleunigung (ẍ₂₁;ẍ₂₂) repräsentierendes erstes elektrisches Signal zu erzeugen,
- einen zweiten Sensor (3b), welcher eingerichtet ist, ein eine zweite Beschleunigung (ẍ₁) repräsentierendes drittes elektrisches Signal zu erzeugen,
- einen Filter (6a), insbesondere einen Hochpass- oder Bandpassfilter, welcher eingerichtet ist, das erste elektrische Signal zu filtern,
- einen Filter (6c), insbesondere einen Hochpass- oder Bandpassfilter, welcher eingerichtet ist, das dritte elektrische Signal zu filtern,
- einen steuerbaren Verstärker (7a), welcher eingerichtet ist, eine Amplitude des ersten elektrischen Signals anzupassen,
- einen steuerbaren Verstärker (7c), welcher eingerichtet ist, eine Amplitude des dritten elektrischen Signals anzupassen, und
- ein Gewichtungsglied (8a), das erste elektrische Signal und das dritte elektrische Signal zu gewichten,
wobei der Aktuator (1) weiter eingerichtet ist, mit der Summe (uₐ) der gefilterten, hinsichtlich ihren Amplitude angepassten und gewichteten ersten und dritten elektrischen Signale angesteuert zu werden.

5. Fahrzeug mit einem aktiven Fahrwerksdämpfer, welcher eingerichtet ist, durch ein System nach Anspruch 4 angesteuert zu werden.

6. Computerprogrammprodukt umfassend Instruktionen, welche, wenn sie auf einem programmierbaren Prozessor eines Systems (2) nach Anspruch 4 ausgeführt werden, den Prozessor veranlassen, die Schritte eines Verfahrens nach einem der Ansprüche 1 bis 3 durchzuführen.

## Claims

1. A method for controlling an actuator (1) of an active damper system (2) for a chassis of a vehicle (10), comprising the following steps:
- filtering (200) a first electrical signal representing a first acceleration (ẍ₂), specifically an acceleration of a vehicle structure or a sprung mass (m₂),
- filtering (200) a third electrical signal representing a second acceleration (ẍ₂₂),
- modifying (300) an amplitude of the first electrical signal and
- modifying (300) an amplitude of the third electrical signal,
- weighting (400) the first electrical signal and the third electrical signal, and
- controlling (500) the actuator (1) with a weighted sum of the filtered first and third electrical signals modified in respect of their amplitude,
**characterised in that** the second acceleration signal is associated with a wheel-side component or an unsprung mass (m₁) of the vehicle (10), and
**characterised by** at least one further step, specifically
- recording (100) and converting the first acceleration signal and/or the second acceleration signal by means of an acceleration sensor (3, 3b), and/or
- estimating the first acceleration signal and/or the second acceleration signal on the basis of an electrical terminal size (I, U) of the actuator (1).

2. A method according to the preceding claim, further comprising the steps of
- recording (500) the first acceleration signal and
- again modifying (600) the amplitude of the first electrical signal prior to the control of the actuator (1) in response to a result of the evaluation.

3. A method according to either one of the preceding claims, further comprising the steps of
- integrating (150) the first electrical signal representing the first acceleration (ẍ₂) in order to generate a second electrical signal representing a speed (ẋ₂),
- filtering (200) the second electrical signal,
- modifying (300) an amplitude of the second electrical signal and then
- controlling (500) the actuator (1) on the basis of a sum signal (Uₐ) formed from the filtered first electrical signal and second electrical signal, each modified in respect of their amplitude.

4. A system for actively damping the chassis of a vehicle (10), wherein in this system a method according to any one of the preceding claims is performed, said system comprising:
- an actuator (1) which is used for electromotive pumping of a fluid (4) provided substantially for damping, and more especially a gerotor which is driven by an electric motor (15),
- a first sensor (3ₐ), which is designed to generate a first electrical signal representing a first acceleration (ẍ₂₁, ẍ₂₂),
- a second sensor (3b), which is designed to generate a third electrical signal representing a second acceleration (ẍ₁),
- a filter (6a), more especially a high-pass or bandpass filter, which is designed to filter the first electrical signal,
- a filter (6c), more especially a high-pass or bandpass filter, which is designed to filter the third electrical signal,
- a controllable amplifier (7a), which is designed to modify an amplitude of the first electrical signal,
- a controllable amplifier (7c), which is designed to modify an amplitude of the third electrical signal, and
- a weighting member (8a), which weights the first electrical signal and the third electrical signal,
wherein the actuator (1) is also designed to be controlled with the sum (uₐ) of the filtered and weighted first and third electrical signals modified in respect of their amplitude.

5. A vehicle having an active chassis damper which is designed to be controlled by a system according to claim 4.

6. A computer program product comprising instructions which, when executed on a programmable processor of a system (2) according to claim 4, prompt the processor to perform the steps of a method according to any one of claims 1 to 3.

## Revendications

1. Procédé permettant de commander un actionneur (1) d'un système d'amortisseurs actif (2) destiné au train de roulement d'un véhicule (10) comprenant des étapes consistant à :
- filtrer (200) un premier signal électrique représentant une première accélération (x₂), à savoir une accélération d'une carrosserie de véhicule ou d'une masse élastique (m₂),
- filtrer (200) un troisième signal électrique représentant une seconde accélération (x₂₂),
- adapter (300) l'amplitude du premier signal électrique, et
- adapter (300) l'amplitude du troisième signal électrique,
- pondérer (400) le premier signal électrique et le troisième signal électrique, et
- commander (500) l'actionneur (1) avec la somme pondérée du premier signal électrique et du troisième signal électrique respectivement filtrés et dont l'amplitude a été adaptée,
procédé **caractérisé en ce que**
le second signal d'accélération est associé à un composant situé côté roue ou à une masse non élastique (m₁) du véhicule (10), et
**en ce qu'**il comporte au moins l'une des étapes suivantes consistant à :
- prélever (100) et convertir le premier signal d'accélération et/ou le second signal d'accélération au moyen d'un capteur d'accélération (3a, 3b), et/ou
- évaluer le premier signal d'accélération et/ou le second signal d'accélération sur le fondement d'une grandeur de bornes électrique (I, U) de l'actionneur (1).

2. Procédé conforme à la revendication précédente, comprenant des étapes consistant à :
- prélever (500) le premier signal d'accélération, et
- adapter un nouveau (600) l'amplitude du premier signal électrique avant la commande de l'actionneur (1) en fonction du résultat de l'évaluation.

3. Procédé, conforme à l'une des revendications précédentes, comprenant en outre des étapes consistant à :
- intégrer (150) le premier signal électrique représentant la première accélération (x₂) pour obtenir un second signal électrique représentant une vitesse (x₂),
- filtrer (200) le second signal électrique,
- adapter (300) l'amplitude du second signal électrique, puis commander (500) l'actionneur (1) sur le fondement du signal de somme (Ua) du premier signal électrique et du second signal électrique respectivement filtrés et dont l'amplitude a été adaptée.

4. Système d'amortissement actif du train de roulement d'un véhicule (10), permettant la mise en oeuvre d'un procédé conforme à l'une des revendications précédentes, se système comprenant :
- un actionneur (1) servant au pompage électro-motorisé d'un fluide (4) essentiellement prévu dans un but d'amortissement, et comporte en particulier un girotor qui est entraîné par un moteur électrique (15),
- un premier capteur (3a) susceptible de produire un premier signal électrique représentant une première accélération (x₂₁, x₂₂),
- un second capteur (3b) susceptible de produire un troisième signal électrique représentant une seconde accélération (x₁),
- un filtre (6a), en particulier un filtre passe haut ou un filtre passe bande susceptible de filtrer le premier signal électrique,
- un filtre (6c), en particulier un filtre passe haut ou un filtre passe bande susceptible de filtrer le troisième signal électrique,
- un amplificateur commandable (7a) susceptible d'adapter l'amplitude du premier signal électrique,
- un amplificateur commandable (7c) susceptible d'adapter l'amplitude du troisième signal électrique, et
- un organe de pondération (8a) permettant de pondérer le premier signal électrique et le troisième signal électrique,
l'actionneur (1) étant en outre susceptible d'être commandé par la somme (Ua) du premier signal électrique et du troisième signal électrique respectivement filtrés et dont l'amplitude a été adaptée, et pondérée.

5. Véhicule équipé d'un amortisseur de train de roulement actif susceptible d'être commandé par un système conforme à la revendication 4.

6. Produit programme d'ordinateur comprenant des instructions qui, lorsqu'elles sont exécutées sur un processeur programmable d'un système (2) conforme à la revendication 4, permettent au processeur de mettre en oeuvre les étapes d'un procédé conforme à l'une des revendications là 3.
